Europäisches Patentamt

(19) European Patent Office

Office européen des brevets

(11) Numéro de publication : **0 086 158**
**B1**

(12) **FASCICULE DE BREVET EUROPÉEN**

(45) Date de publication du fascicule du brevet :
**22.01.86**

(51) Int. Cl.⁴ : **G 01 N 27/90**

(21) Numéro de dépôt : **83400261.0**

(22) Date de dépôt : **07.02.83**

(54) **Circuit d'alimentation d'une sonde à courants de Foucault.**

(30) Priorité : **10.02.82 FR 8202171**

(43) Date de publication de la demande :
**17.08.83 Bulletin 83/33**

(45) Mention de la délivrance du brevet :
**22.01.86 Bulletin 86/04**

(84) Etats contractants désignés :
**AT CH DE GB IT LI LU NL SE**

(56) Documents cités :
**FR-A- 2 339 170**
**US-A- 3 683 671**

(73) Titulaire : **INTERCONTROLE Société dite:**
**15, rue des Solets Bt L 15 Zone Silic 433**
**F-94583 Rungis Cedex (FR)**

(72) Inventeur : **Rebour, Alain**
**203, rue Pierre et Marie Curie**
**F-91000 Evry (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

**Description**

La présente invention a pour objet un circuit d'alimentation d'une sonde à courants de Foucault. Elle trouve une application dans le contrôle non destructif de pièces métalliques, notamment de tubes.

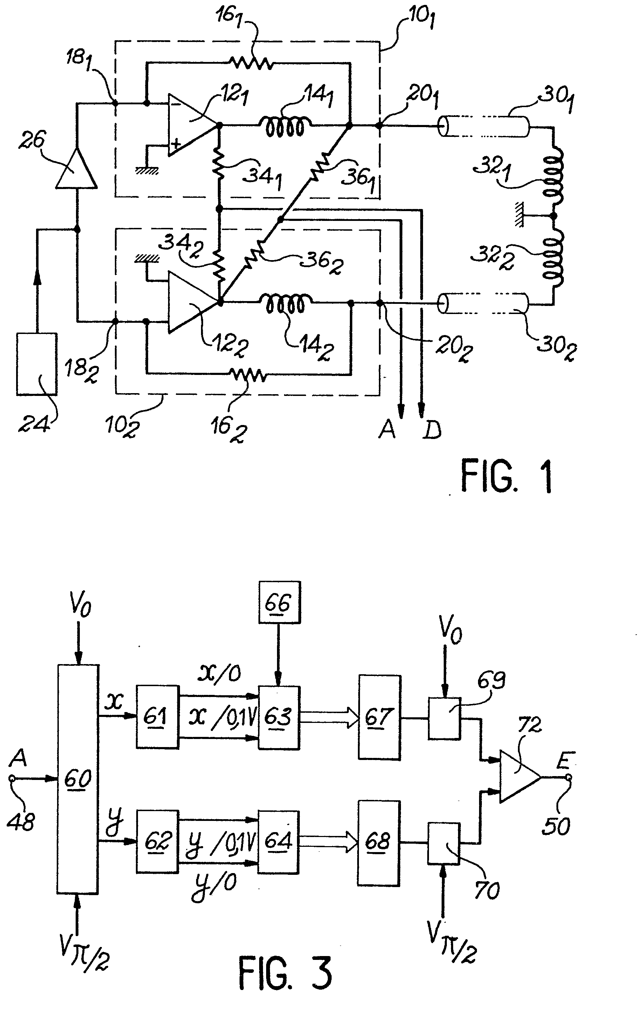

Un circuit connu pour l'alimentation de sondes à courants de Foucault est représenté sur la figure 1. Il comprend deux voies $10_1$, $10_2$ travaillant en parallèle. Chaque voie comprend un circuit d'amplification $12_1$, $12_2$ (qui, dans l'exemple illustré, est un amplificateur différentiel), un enroulement de référence $14_1$, $14_2$ et une résistance $16_1$, $16_2$ connectée en contre-réaction sur l'ensemble amplificateur-enroulement. Chaque voie possède une entrée $18_1$, $18_2$ et une sortie $20_1$, $20_2$. Les entrées sont reliées à une source d'alimentation 24, par l'intermédiaire d'un amplificateur 26 de gain $-1$ pour l'une d'entre elles (en l'occurrence l'entrée $18_1$ de la voie $10_1$). La sortie de chaque voie est reliée à un câble coaxial $30_1$, $30_2$ alimentant une sonde formée par deux enroulements $32_1$, $32_2$.

Deux résistances $34_1$, $34_2$ relient les sorties des amplificateurs $12_1$, $12_2$. Leur point milieu permet d'extraire un signal sur une connexion D, ce signal constituant une mesure différentielle du déséquilibre de la sonde. Deux autres résistances $36_1$, $36_2$ relient la sortie d'une des voies à la sortie de l'amplificateur de l'autre voie. Leur point milieu permet d'extraire un signal sur une connexion A, lequel signal constitue une mesure absolue.

Ce dispositif présente l'inconvénient de manquer de stabilité du fait des amplificateurs $12_1$, $12_2$ auxquels il est demandé simultanément de fournir un courant élevé à la sonde et d'asservir la tension aux bornes de la sonde (bande passante élevée associée à un courant de sortie important). L'invention a justement pour but de remédier à cet inconvénient.

A cette fin, les circuits d'amplification sont modifiés. Dans l'art antérieur, ces circuits sont réalisés par un unique amplificateur $12_1$, $12_2$, qui assure simultanément deux fonctions : asservir la tension de sortie à la tension d'entrée et fournir la puissance électrique nécessaire à la sonde. Selon l'invention, le circuit amplificateur est constitué par deux amplificateurs distincts qui remplissent séparément ces deux fonctions : le premier assure l'asservissement de la tension et permet de prélever à sa sortie, une tension de mesure absolue, et le second assure l'alimentation de la sonde.

De façon précise, la présente invention a pour objet un circuit d'alimentation d'une sonde à courants de Foucault à deux enroulements, comprenant deux voies d'alimentation en parallèle chacune ayant une entrée et une sortie, les entrées étant reliées à une source d'alimentation et les sorties étant reliées à la sonde par un câble, chaque voie comprenant un enroulement de référence et un circuit d'amplification ayant une entrée, qui est celle de la voie d'alimentation correspondante, et une sortie, l'une des extrémités de l'enroulement de référence étant reliée à la sortie du circuit d'amplification et l'autre, qui est la sortie de la voie d'alimentation correspondante, étant reliée à l'entrée du circuit d'amplification par l'intermédiaire d'une résistance de contre-réaction, le circuit d'amplification comprenant une première résistance, une seconde résistance et un premier amplificateur ayant une entrée constituant l'entrée du circuit d'amplification et une sortie, caractérisé en ce que la sortie du premier amplificateur est reliée directement à un accès de mesure absolue, une extrémité de la première résistance étant aussi reliée à la sortie du premier amplificateur et en ce que le circuit d'amplification comporte en outre un second amplificateur à une entrée reliée à l'autre extrémité de la première résistance et une sortie constituant la sortie du circuit d'amplification, la seconde résistance étant connectée entre la sortie et l'entrée du second amplificateur.

Les caractéristiques de l'invention apparaîtront mieux après la description qui suit d'un exemple de réalisation donné à titre explicatif et nullement limitatif. Cette description se réfère à des dessins annexés qui contiennent, en plus de la figure 1, déjà décrite :

la figure 2 représentant le schéma général du circuit de l'invention,

la figure 3 illustrant un circuit d'équilibrage.

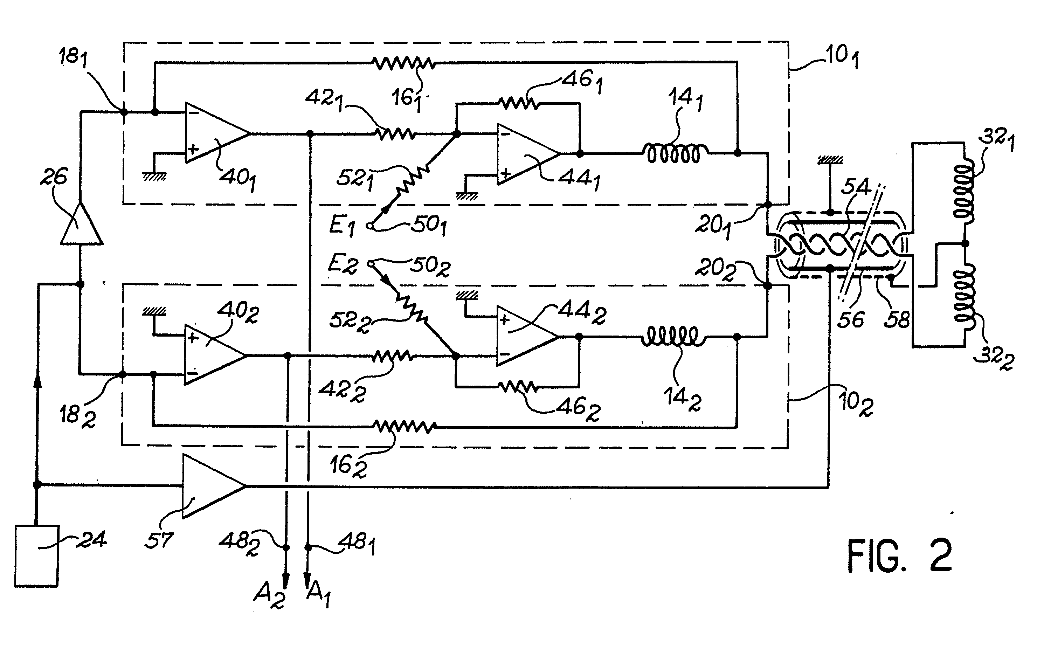

Le circuit de la figure 2 contient des éléments déjà représentés sur la figure 1, et qui portent les mêmes références. L'invention tient essentiellement dans la structure des moyens d'amplification utilisés dans chaque voie. Comme ces moyens sont les mêmes pour les deux voies, la description qui suit se réfère à une seule de ces voies, la première par exemple. Les références sont alors affectées d'un indice 1. Pour la seconde voie, les moyens équivalents portent les mêmes références mais avec un indice 2.

Le circuit d'amplification de la première voie comprend un premier amplificateur $40_1$ de gain $-1$. Ce circuit possède une entrée reliée à l'entrée $18_1$ de la voie et une sortie reliée à un accès $48_1$ où est disponible un signal $A_1$. En pratique, l'amplificateur $40_1$ peut être un amplificateur différentiel ayant une entrée inverseuse et une entrée non inverseuse. La première reçoit la tension d'alimentation et la seconde est reliée à la masse.

Le circuit comprend ensuite une résistance $42_1$, puis un second amplificateur $44_1$ dont l'entrée est reliée à cette résistance. En pratique, cet amplificateur est lui aussi du type différentiel, avec une entrée inverseuse reliée à la résistance $42_1$ et une entrée non inverseuse reliée à la masse. Une résistance $46_1$ est connectée entre la sortie et l'entrée de l'amplificateur $44_1$. Par ailleurs, l'entrée inverseuse de celui-ci est reliée, par une résistance 52, à un accès $E_1$ où peut être injectée une tension d'équilibrage.

Avec de tels moyens, c'est l'amplificateur $40_1$

qui assure l'asservissement de la tension de mesure, le rôle de l'amplificateur $44_1$ n'étant plus que d'assurer l'alimentation en puissance de la sonde. La stabilité de l'amplificateur $40_1$ peut alors être bien meilleure que celle de l'amplificateur $12_1$ de l'art antérieur qui devrait être aussi un amplificateur de puissance. Le circuit de l'invention a donc gagné en stabilité.

On notera que l'équilibrage réalisé au niveau des amplificateurs $44_1$ et $44_2$ permet d'avoir deux mesures absolues nulles à l'équilibre, ce qui autorise :

— une amplification aussi grande que nécessaire sans risque de saturation (mesures absolues sensibles),

— l'éventuelle suppression des filtres lors de l'utilisation de ce système en contrôle multifréquence.

Dans le circuit antérieur les deux sorties d'alimentation de la sonde étaient symétriques du point de vue des potentiels. Dans le système de l'invention, les deux sorties $20_1$ et $20_2$ des deux voies de mesure sont au même potentiel. Le câble de transmission relié à la sonde peut alors être réalisé non plus par deux coaxiaux mais par deux conducteurs torsadés, sans que cela conduise à une capacité parasite. La section de ces fils peut être choisie assez grande, de sorte que la résistance électrique du câble se trouve réduite. Par rapport à l'art antérieur, un facteur 10 peut être obtenu dans la réduction de la résistance du câble. Les pertes en basse fréquence sont donc considérablement réduites.

Selon ce mode de réalisation le câble se présente sous la forme de deux fils torsadés 54, disposés à l'intérieur d'un anneau de garde 56 relié à l'alimentation 24 par un amplificateur 57. L'anneau de garde est entouré d'un blindage 58 relié à la terre.

Le courant capacitif alimentant le câble est alors fourni par l'amplificateur 57, lequel ne participe pas à la mesure. Les signaux de mesure $A_1$ et $A_2$ prélevés en $48_1$, $48_2$ ne sont donc pas affectés par ce courant.

Cette disposition permet d'augmenter la longueur du câble dans de grandes proportions sans que la résistance devienne prohibitive, ce qui est utile lorsque la sonde doit se déplacer dans des pièces situées loin des moyens de mesure. C'est le cas notamment dans le contrôle de tubes générateurs de vapeur situés dans un réacteur nucléaire.

En l'absence de pièce à contrôler, les signaux de mesure $A_1$ et $A_2$ peuvent ne pas être rigoureusement nuls en raison de déséquilibres affectant la sonde et les circuits. Une tension d'équilibrage, apte à corriger ce défaut, doit alors être injectée dans chaque voie. Ces tensions d'équilibrage ($E_1$ et $E_2$) sont appliquées sur les accès $50_1$ et $50_2$. Un circuit apte à engendrer de telles tensions est représenté sur la figure 3. Comme il est valable pour chacune des voies, les références ne sont pas affectées d'un indice.

Ce circuit reçoit une tension A prélevée sur une borne 48 (accès $48_1$ ou $48_2$ de la figure 2) et délivre une tension d'équilibrage E sur une borne 50 (accès $50_1$ ou $50_2$ du circuit de la figure 2). Ce circuit comprend successivement : un analyseur 60 recevant une tension $V_0$ en phase avec la tension d'alimentation et une tension $V_{\pi/2}$ en quadrature de phase avec cette tension ; l'analyseur délivre deux tensions x et y qui sont respectivement les composantes du signal d'entrée en phase et en quadrature de phase avec la tension d'alimentation ; deux comparateurs 61 et 62, qui reçoivent respectivement les tensions x et y et qui comparent ces tensions à deux seuils, l'un nul et l'autre faible, par exemple 0,1 V ; deux signaux sont émis par ces comparateurs indiquant la place respective de x et y par rapport à ces deux seuils ; deux compteurs-décompteurs 63, 64 alimentés par une horloge 66 ; deux convertisseurs numérique-analogique 67, 68 disposés à la sortie des compteurs ; deux multiplieurs 69, 70 recevant respectivement les tensions $V_0$ et $V_{\pi/2}$ en phase et en quadrature de phase avec la tension d'alimentation ; un sommateur 72 à deux entrées reliées aux deux multiplieurs et à une sortie constituant la sortie du circuit.

Un tel circuit est connu. Son fonctionnement est le suivant. Les compteurs-décompteurs voient leur contenu varier si les tensions x et y sont hors de la fourchette définie par les deux seuils : ce contenu augmente si x et y sont au-delà du seuil haut et diminue si x et y sont négatifs. Le contenu des compteurs reflète donc la valeur du signal de déséquilibre exprimé en numérique. La conversion en analogique, obtenue dans les circuits 67 et 68, permet d'alimenter les multiplieurs 69 et 70 qui restituent les deux composantes du signal de correction.

**Revendications**

1. Circuit d'alimentation d'une sonde à courants de Foucault à deux enroulements ($32_1$, $32_2$) comprenant deux voies d'alimentation ($10_1$, $10_2$) en parallèle chacune ayant une entrée ($18_1$, $18_2$) et une sortie ($20_1$, $20_2$), les entrées étant reliées à une source d'alimentation (24) et les sorties étant reliées à la sonde par un câble, chaque voie comprenant un enroulement de référence ($14_1$, $14_2$) et un circuit d'amplification ayant une entrée ($18_1$, $18_2$), qui est celle de la voie d'alimentation correspondante, et une sortie, l'une des extrémités de l'enroulement de référence étant reliée à la sortie du circuit d'amplification et l'autre, qui est la sortie ($20_1$, $20_2$) de la voie d'alimentation correspondante, étant reliée à l'entrée du circuit d'amplification par l'intermédiaire d'une résistance de contre-réaction ($16_1$, $16_2$), le circuit d'amplification comprenant une première résistance ($42_1$, $42_2$), une seconde résistance ($46_1$, $46_2$) et un premier amplificateur ($40_1$, $40_2$) ayant une entrée constituant l'entrée ($18_1$, $18_2$) du circuit d'amplification et une sortie, caractérisé en ce que la sortie du premier amplificateur est reliée directement à un accès de mesure absolue ($48_1$, $48_2$), une extrémité de la première résistance (42₁, 42₂) étant aussi reliée à la sortie du premier amplificateur et en ce que le circuit d'amplification comporte en outre un second amplificateur (44₁, 44₂) à une entrée reliée à l'autre extrémité de la première résistance (42₁, 42₂) et une sortie constituant la sortie du circuit d'amplification, la seconde résistance (46₁, 46₂) étant connectée entre la sortie et l'entrée du second amplificateur (44₁, 44₂).

2. Circuit selon la revendication 1, caractérisé en ce que le câble comprend deux conducteurs torsadés (54) disposés dans un anneau de garde (56) relié à l'entrée des voies d'alimentation par un amplificateur (57).

3. Circuit selon la revendication 1, caractérisé en ce que l'entrée de chaque second amplificateur (44₁, 44₂) est reliée à une entrée d'équilibrage (50₁, 50₂).

## Claims

1. Supply circuit for an eddy-current sensor having two windings (32₁, 32₂) comprising two supply lines (10₁, 10₂) in parallel, each having an input (18₁, 18₂) and an output (20₁, 20₂), the inputs being connected to the supply source (24) and the outputs being connected to the sensor by a cable, each line comprising a reference winding (14₁, 14₂) and an amplifying circuit having an input (18₁, 18₂) which is that of the corresponding supply line, and an output, one end of the reference winding connected to the output of the supply circuit and the other, which is the output (20₁, 20₂) of the corresponding supply line, being connected to the input of the supply circuit through a counter-reacting resistance (16₁, 16₂), the amplifying circuit comprising a first resistance (42₁, 42₂), a second resistance (46₁, 46₂) and a first amplifier (40₁, 40₂) having an input constituting the input (18₁, 18₂) of the supply circuit and an output, characterised in that the output of the first amplifier is directly connected to an absolute-measurement access (48₁, 48₂) an end of the first resistance (42₁, 42₂) being also connected to the output of the first amplifier, and in that the amplifying circuit additionally comprises a second amplifier (44₁, 44₂) with an input connected to the other end of the first resistance (42₁, 42₂) and an output constituting the output of the supply circuit, the second resistance (46₁, 46₂) being connected between the output and the input of the second amplifier (44₁, 44₂).

2. A circuit according to Claim 1, characterised in that the cable comprises two twisted conductors (54) located in a guard ring (56) connected to the input of the supply lines by an amplifier (57).

3. A circuit according to Claim 1, characterised in that the input of each second amplifier (44₁, 44₂) is connected to an equilibration input (50₁, 50₂).

## Patentansprüche

1. Versorgungsschaltkreis für eine Wirbelstromsonde mit zwei Wicklungen (32₁, 32₂), der zwei parallele Versorgungszweige (10₁, 10₂) umfaßt, von denen jeder einen Eingang (18₁, 18₂) und einen Ausgang (20₁, 20₂) aufweist, die über ein Kabel mit der Sonde verbunden sind, wobei jeder Zweig eine Bezugswicklung (14₁, 14₂) und einen Verstärkerkreis mit einem Eingang (18₁, 18₂), welcher derjenige des entsprechenden Versorgungszweiges ist, und einen Ausgang aufweist, eines der Enden der Bezugswicklungen mit dem Ausgang des Verstärkerkreises und das andere, welches der Ausgang (20₁, 20₂) des entsprechenden Versorgungszweiges ist, über einen Gegenkopplungswiderstand (16₁, 16₂) mit dem Eingang des Verstärkerkreises verbunden ist, welcher einen ersten Widerstand (42₁, 42₂), einen zweiten Widerstand (46₁, 46₂) und einen ersten Verstärker (40₁, 40₂) aufweist, der einen den Eingang (18₁, 18₂) des Verstärkerkreises bildenden Eingang und einen Ausgang aufweist, dadurch gekennzeichnet, daß der Ausgang des ersten Verstärkers unmittelbar mit einem Absolutmessungszugang (48₁, 48₂) verbunden ist, ein Ende des ersten Widerstandes (42₁, 42₂) ebenfalls mit dem Ausgang des ersten Verstärkers verbunden ist und daß der Verstärkerkreis ferner einen zweiten Verstärker (44₁, 44₂) mit einem mit dem anderen Ende des ersten Widerstandes (42₁, 42₂) verbundenen Eingang und einem Ausgang aufweist, der den Ausgang des Verstärkerkreises bildet, wobei der zweite Widerstand (46₁, 46₂) zwischen den Ausgang und den Eingang des zweiten Verstärkers (44₁, 44₂) geschaltet ist.

2. Schaltkreis nach Anspruch 1, dadurch gekennzeichnet, daß das Kabel zwei verdrillte Leiter (54) aufweist, die in einem Schutzring (56) angeordnet sind, der mit dem Eingang der Versorgungszweige über einen Verstärker (57) verbunden ist.

3. Schaltkreis nach Anspruch 1, dadurch gekennzeichnet, daß der Eingang eines jeden zweiten Verstärkers (44₁, 44₂) mit einem Ausgleichseingang (50₁, 50₂) verbunden ist.

FIG. 1

FIG. 3

FIG. 2

0 086 158